# EUROPEAN PATENT SPECIFICATION

(11) **EP 0 468 808 B1**
(45) Date of publication and mention of the grant of the patent: **04.01.1995**
(21) Application number: 91306838.3
(22) Date of filing: 26.07.1991
(51) Int. Cl.: H05F 3/02, B29C 70/00, F04B 15/00, F04B 43/00

(54) **Conductive plastic fluid handling equipment**
Gerät aus leitfähigem Kunststoffmaterial zur Flüssigkeitsbehandlung
Appareil en plastique conducteur pour la manipulation de fluides

(30) Priority: 27.07.1990 US 559205
(43) Date of publication of application: 29.01.1992
(73) Proprietor: THE ARO CORPORATION, Bryan, Ohio 43506-0151 (US)
(72) Inventor: Kozumplik, Nicholas, Jr., Bryan, Ohio 43506 (US)
(74) Representative: Feakins, Graham Allan

(56) References cited:
- EP-A- 0 005 440
- EP-A- 0 210 315
- FR-A- 1 377 755
- US-A- 3 410 936
- US-A- 3 895 162
- PATENT ABSTRACTS OF JAPAN, vol. 10, no. 292 (C-376)[2348], 3rd October 1986;& JP-A-61 108 666

## Description

This invention relates generally to plastics fluid handling equipment such as plastics diaphragm pumps and more particularly to grounding of this equipment to prevent static discharge.

This invention is applicable to the various components in a fluid handling system including but not limited to pumps, valves, accumulators, nozzles, regulators, piping, etc. In particular, the current line of plastics diaphragm pumps and components available in the marketplace cannot be effectively grounded. As material flows through the system, static electricity is generated and accumulates on the metal components (especially fasteners) of the plastics diaphragm pumps and accessories. Independent lab testing has shown that sufficient energy can accumulate which could result in a static discharge. If the environment in which the pump is operating contains a flammable mixture of gases or dust, the discharge could ignite the atmosphere causing an explosion. Since the thermoplastic materials commonly used in plastics diaphragm pumps and components are non-conducting, the metal components cannot be grounded effectively without physically wiring them together. This wiring is time-consuming and the completed wiring is subject to physical damage and corrosion which may negate the effective ground.

In one approach to this problem, plastics pumps have been developed and are on the market which are conductive; however, they have several limitations. In general, these pumps use heavy loadings of carbon black to obtain the desired conductivity. This has an adverse effect on the mechanical properties of the plastics and the carbon can leach into the fluid being pumped thereby contaminating the fluid.

In addition, the pumps in general are moulded in polypropylene which is not compatible with materials such as, but not limited to MEK, XYLENE, TOLUENE, ACETONE, solvent based paints and stains. Polypropylene softens, swells and mechanical strength is lost when exposed to the above fluids.

A fluid handling device according to the preamble of Claim 1 is known from US-A-3 410 936.

According to the present invention, there is provided a fluid handling device comprising a plurality of plastics parts having metallic conductive strands embedded therein, characterised in that said plastics parts are electrically conductive by being formed from homopolymer acetal resin with said metallic conductive strands embedded therein, and there being a connecting bonding strap between said parts, said bonding strap further providing a means for grounding said components.

For a better understanding of the invention and to show how the same may be carried into effect, reference will now be made, by way of example, to the accompanying drawings, in which:-
Figure 1 is a cross-sectional side view illustrating a conductive plastics diaphragm pump;
Figure 2 is an end view of the pump; and
Figure 3 is a partially sectioned end view of a diaphragm pump illustrating an alternative embodiment having dual inlet and outlet capability.

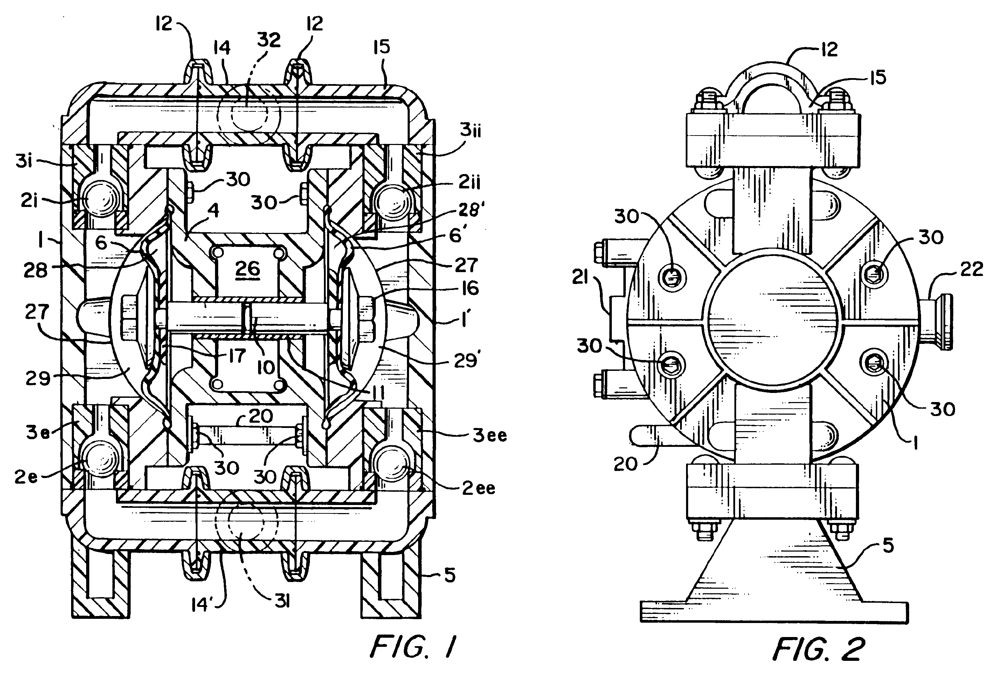

Referring to Figure 1, a diaphragm pump according to the present invention is shown. The pump comprises a flanged hollow cylindrical body 4 having an interior exhaust chamber 26. Bolted on either end of the body are fluid end caps 1 which co-operate with the body 4 to form a cavity 27. The fluid caps and the body are attached together and fastened by means of eight bolts 30, four of which are accessed from the exterior of the fluid caps and four of which are accessed through the flanged internal area of the body. Two flexible diaphrams 6, 6′ each divide the cavity 27 into two chambers, an interior chamber 28 and 28′ and an exterior chamber 29 and 29′, respectively. A diaphragm rod 10 connects the diaphram 6 and 6′ and is free to reciprocate in a diaphragm rod sleeve 11 protruding through the body 4.

The exterior chambers 29 and 29′ communicate through ball check valves to an inlet manifold 5 and an exhaust manifold 15. The fluid to be pumped enters the manifold 5 through an inlet 31, is drawn into the exterior chambers 29 and 29′ through one way check valves 2e and 2ee respectively by the reciprocating action of the diaphragm 6. Upon the return stroke of the diaphragm 6′ fluid is alternately expelled through the one way check valves 2i and 2ii respectively and force to exit the pump through outlet 30. The diaphragm rod and diaphragms, respectively 6 and 6′, are reciprocated by the alternate application of compressed air or other fluid in the interior chambers 28 and 28′ as well known in the art.

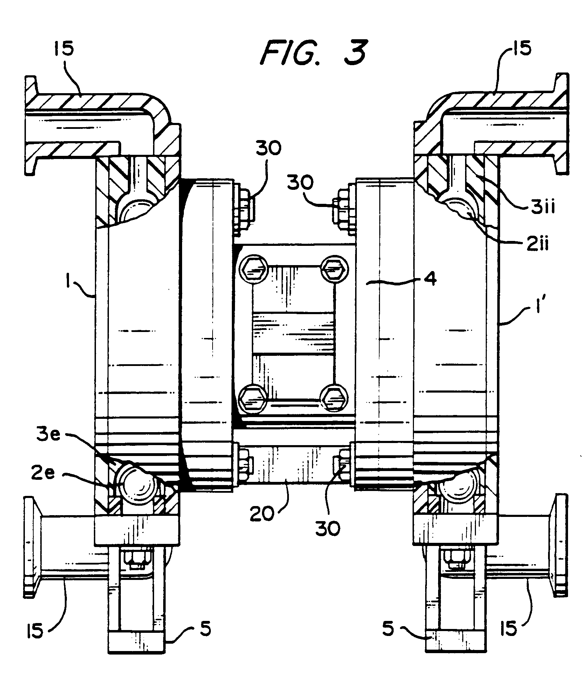

In the embodiment shown in Figure 3 each end of the pump is individually manifolded so that two different fluids may be pumped or a single fluid may be pumped in two stages.

The pump casing comprised of the fluid end caps 1 and 1′, as well as the inlet and outlet manifold, are made from a conductive material formed by mixing stainless steel or other corrosion resistant metallic wool or stranded conductive fibre in a compounded and blended mixture of acetal resin, which is then injection moulded or similarly moulded by, for example, extrusion to form the various casing components. In particular, a 7 percent by weight addition of stainless steel wool in a monopolymer acetal plastics has been found to be an economical and effective material for moulding conductive plastics pump casing parts.

An additional feature is a grounding strap 20 which couples the fluid caps 1 and 1′ together to form an electrically bonded device. The ground strap 20 may form a convenient place for grounding the pump casing. In this matter a simple and economic means of grounding low cost plastics pumps is provided.

## Claims

1. A fluid handling device comprising a plurality of plastics parts (1, 1', 5, 15) having metallic conductive strands embedded therein, characterised in that said plastics parts are electrically conductive by being formed from homopolymer acetal resin with said metallic conductive strands embedded therein, and there being a connecting bonding strap (20) between said parts, said bonding strap further providing a means for grounding said components.

2. The device according to claim 1, wherein said strands are of a stainless steel wool.

3. The device according to claim 2, wherein said stainless steel wool comprises less than twenty-five percent by weight of the said parts.

4. The device according to claim 3, wherein said stainless steel wool comprises seven percent by weight of said parts.

5. The fluid handling device according to any one of the preceding claims and being in the form of a diaphragm pump.

6. The device according to claim 5 and being for combustible corrosive liquids and comprising:
a plastics pump housing formed of moulded parts assembled together by means of fasteners (30);
said housing being made from said homopolymer acetal resin having embedded therein metallic strands thereby rendering the housing conductive to electrostatic charge.

## Patentansprüche

1. Fluidbehandlungsvorrichtung mit einer Mehrzahl von Kunststoffteilen (1, 1′, 5, 15) mit darin eingebetteten metallischen leitenden Litzen, **dadurch gekennzeichnet,** daß die Kunststoffteile elektrisch leitend sind, indem sie aus homopolymerem Acetalharz geformt sind, wobei die metallischen leitenden Litzen darin eingebettet sind, und daß sich zwischen den Teilen ein verbindender Verbindungsstreifen (20) befindet, wobei der Verbindungsstreifen außerdem eine Vorrichtung zum Erden der Komponenten bildet.

2. Vorrichtung nach Anspruch 1, wobei die Litzen aus nichtrostender Stahlwolle bestehen.

3. Vorrichtung nach Anspruch 2, wobei die nichtrostende Stahlwolle weniger als 25 Gewichtsprozent der Teile ausmacht.

4. Vorrichtung nach Anspruch 3, wobei die nichtrostende Stahlwolle sieben Prozent des Gewichtes der Teile ausmacht.

5. Fluidbehandlungsvorrichtung nach einem der vorhergehenden Ansprüche und in Form einer Membranpumpe.

6. Vorrichtung nach Anspruch 5 und für verbrennbare korrosive Flüssigkeiten und mit
- einem Kunststoffpumpengehäuse, das aus geformten Teilen besteht, die mittels Befestigungsmitteln (30) zusammenmontiert sind,
- wobei das Gehäuse aus einem Homopolymeracetalharz hergestellt ist, wobei darin metallische Litzen eingebettet sind, wodurch das Gehäuse für eine elektrostatische Ladung leitend gemacht wird.

## Revendications

1. Appareil pour manipuler un fluide, comportant une pluralité de pièces en plastique (1, 1′, 5, 15) dans lesquelles sont enrobés des brins métalliques conducteurs, caractérisé par le fait que lesdites pièces en plastique sont électriquement conductrices comme étant formées d'une résine acétal homopolymère avec lesdits brins métalliques conducteurs qui y sont enrobés, une barrette de liaison (20) assurant la connexion entre lesdites parties , ladite barrette de liaison fournissant en outre un moyen de mise à la masse desdits composants.

2. Appareil selon la revendication 1, dans lequel lesdits brins sont en laine d'acier inoxydable.

3. Appareil selon la revendication 2, dans lequel ladite laine d'acier inoxydable constitue moins de 25 pour cent en poids desdites pièces.

4. Appareil selon la revendication 3, dans lequel ladite laine d'acier inoxydable constitue sept pour cent en poids desdites pièces.

5. Appareil pour manipuler un fluide selon l'une quelconque des revendications précédentes et ayant la forme d'une pompe à membrane.

6. Appareil selon la revendication 5, prévu pour des liquides combustibles corrosifs et comportant:
un carter de pompe en plastique formé de pièces moulées assemblées ensemble au moyen d'éléments de fixation (30);
ledit carter étant fait de ladite résine acétal homopolymère dans laquelle sont enrobés des brins métalliques, rendant ainsi le carter conducteur pour la charge électrostatique.
